(19) Europäisches Patentamt
European Patent Office
Office européen des brevets

(11) **EP 2 749 246 B1**

(12) **EUROPÄISCHE PATENTSCHRIFT**

(45) Veröffentlichungstag und Bekanntmachung des Hinweises auf die Patenterteilung:
**23.12.2015 Patentblatt 2015/52**

(21) Anmeldenummer: **13199452.7**

(22) Anmeldetag: **23.12.2013**

(51) Int Cl.:
*A61C 13/20* (2006.01)     *F27B 17/02* (2006.01)
*F27D 19/00* (2006.01)

(54) **Verfahren zur automatischen Kalibrierung von Dental-Brennöfen und Dental-Brennofen mit automatischer Kalibrierung**

Method for automatic calibration of dental furnaces and dental furnace with automatic calibration

Procédé destiné au calibrage automatique de fours dentaires et four dentaire doté d'un calibrage automatique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.12.2012 EP 12199532**

(43) Veröffentlichungstag der Anmeldung:
**02.07.2014 Patentblatt 2014/27**

(73) Patentinhaber: **Vita Zahnfabrik H. Rauter GmbH & Co. KG**
**79713 Bad Säckingen (DE)**

(72) Erfinder:
• **Rauh, Wolfgang**
**79713 Bad Säckingen (DE)**
• **Tholey, Michael Jochen**
**79713 Bad Säckingen (DE)**
• **Jinoian, Vanik**
**4332 Stein (CH)**

(74) Vertreter: **Von Kreisler Selting Werner - Partnerschaft**
**von Patentanwälten und Rechtsanwälten mbB**
**Deichmannhaus am Dom**
**Bahnhofsvorplatz 1**
**50667 Köln (DE)**

(56) Entgegenhaltungen:
**EP-A1- 1 650 519     EP-A1- 2 026 027**

EP 2 749 246 B1

## Beschreibung

Die Erfindung betrifft ein Verfahren zur automatischen Kalibrierung von Dental-Brennöfen und Dental-Brennofen mit automatischer Kalibrierung zwecks automatischer Einstellung mindestens eines Brennprozessparameters.

Die Temperatur dentaler Brennöfen beeinflusst die Eigenschaften des Brennguts hinsichtlich Glanz, Farbe, Transluzenz und Festigkeit. Bekannte Dental-Brennöfen müssen daher regelmäßig kalibriert werden. Dies erfolgt mit Kalibrier-Brenngutproben, die, wenn sie bei vorschriftsmäßiger Einstellung der Brennprozessparameter gebrannt werden, dass gewünschte, erwartete Ergebnis hinsichtlich Glanz, Farbe, Transluzenz und Festigkeit aufweisen. Abweichungen des Ist-Ergebnisses vom erwarteten Soll-Ergebnis gehen dann in Änderungen der Brennprozessparameter ein. Hier ist vornehmlich die Temperatur des Dental-Brennofens zu nennen (Verschiebung des Offsetwerts der Temperatur), die nachjustiert werden muss. Der zuvor beschriebene Prozess wird manuell durchgeführt und ist dementsprechend aufwändig.

EP-A-1 650 519 beschreibt ein Verfahren zur Kalibrierung eines Dentalbrennofens, der ein Temperaturerfassungselement zur Regelung der Temperatur des Brennofens aufweist. Zur Kalibrierung des Temperaturerfassungselements ist eine Kalibriervorrichtung in der Brennkammer des Brennofens angeordnet. Die Kalibriervorrichtung weist ein Thermopaar und ein Referenzmaterial auf, das bei einer bekannten Temperatur schmilzt. Bei Erreichen der Schmelztemperatur muss die Schmelzenergie als Wärmeenergie zugeführt werden, so dass das Thermopaar bis zum Schmelzen des Referenzmaterials eine konstante Temperatur anzeigt, welche der bekannten Schmelztemperatur des Referenzmaterials entspricht, und anhand welcher das Temperaturerfassungselement kalibriert wird.

EP-A-2 026 027 beschreibt ein Verfahren zur Messung der Temperatur in einem Dentalbrennofen. Dazu wird mindestens eine Brenngutprobe aus einem zu sinternden Material bereitgestellt. Ferner wird ein Gerät bereitgestellt, welches die Länge der Brenngutprobe misst. Die Brenngutprobe wird in dem Dentalbrennofen dem Brennprozess ausgesetzt, wobei die Brenngutprobe einen von der Temperatur abhängigen Längenverlust aufweist, anhand dessen die Temperatur ermittelt wird.

Aufgabe der Erfindung ist es, die Kalibrierung von Dental-Brennöfen zu vereinfachen.

Zur Lösung dieser Aufgabe werden mit der Erfindung ein Verfahren zur automatischen Kalibrierung von Dental-Brennöfen gemäß Anspruch 1 und ein Dental-Brennofen nach Anspruch 4 vorgeschlagen. Einzelne Ausgestaltungen der Erfindung sind Gegenstand der abhängigen Ansprüche.

Erfindungsgemäß wird ein Farbmessgerät, vorzugsweise nach dem photospektrometrischen Prinzip, mit der Steuereinheit eines Dental-Brennofens gekoppelt, so dass die Messergebnisse und/oder Vergleichsergebnisse, die mit dem Farbmessgerät erzielt werden, sogleich in die Steuereinheit des Dental-Brennofens eingehen. Entweder in dem Farbmessgerät oder in der Steuereinheit oder in einer Einheit, auf die zumindest die Steuereinheit zugreifen kann, erfolgt ein Ist/Soll-Vergleich der Farbe einer Kalibrier-Brenngutprobe nach dem Brennprozess. Abweichungen und/oder die Größe bzw. das Ausmaß, d. h. der Grad einer Abweichung werden automatisch in eine Kalibrierung der Brenntemperatur umgesetzt, wobei die kalibrierte Brenntemperatur dann automatisch z.B. in der Steuereinheit oder allgemein in einem automatisch auslesbaren Datenspeicher abgelegt und für die nachfolgenden Brennprozesse verwendet wird, bis eine nächste Kalibrierung des Dental-Brennofens erfolgt. Dies geschieht erfindungsgemäß unter Verwendung einer Tabelle, wobei zur Kalibrierung der Brenntemperatur eine automatisch auslesbare Tabelle verwendet wird, die verschiedene Werte für die Brenntemperatur und diesen Werten jeweils zugeordnete Koordinaten von Ist-Farben enthält, welche sich im Rahmen von im Vorhinein erfolgten Versuchen beim Brennen von im Wesentlichen gleiche Materialeigenschaften sowie geometrische Formen aufweisenden Kalibrier-Brenngutproben unter Verwendung der verschiedenen Werte für die Brenntemperatur insbesondere in dem zu kalibrierenden Dental-Brennofen oder einem damit vergleichbaren Dental-Brennofen (beispielsweise gleiche Baureihe, gleiche Serie oder gleicher Typ) oder in einem anderen Dental-Brennofen, dessen brenntechnische Eigenschaften in einer bekannten Beziehung zum zu kalibrierenden Dental-Brennofen stehen, eingestellt haben. Die für eine spätere Kalibrierung eines Dental-Brennofens im Vorhinein erstellten Messreihen werden zweckmäßigerweise mittels eines Dental-Brennofens durchgeführt, der gleich bzw. wesensgleich mit dem später zu kalibrierenden Dental-Brennofen ist, insbesondere was die technischen, physikalischen und konstruktiven Beschaffenheiten der Brennkammer betrifft. Diesbezüglich könnte z. B. die Messreihe mit einem Dental-Brennofen durchgeführt werden, zu dem die später zu kalibrierenden Dental-Brennöfen baugleich sind (gleiche Baureihe, gleicher Typ etc.) oder zu dem die später zu kalibrierenden Dental-Brennöfen in einer hinsichtlich der brenntechnischen Eigenschaften bekannten Beziehung stehen, mit dem die Messreihe(n) durch wurde(n).

Im Rahmen der Erfindung umfasst die Farbe die Definition mindestens eines der nachfolgende genannten Parameter:

Farbe im eigentlichen Sinne, Farbsättigung, Farbton, Farbhelligkeit, Transluzenz und Glanz. Das Farbmessgerät ist demzufolge in der Lage, mindestens einen dieser Parameter messtechnisch zu erfassen.

In weiterer vorteilhafter Ausgestaltung der Erfindung kann vorgesehen sein, dass das Farbmessgerät ein digitales Farbmessgerät ist. Dabei spielt es keine Rolle, welcher Farbraum im Farbmessgerät zu Grunde gelegt ist. Farbmessungen resultieren im allgemeinen in einem Wertetripel, also in drei Parametern; es existieren mehrere geläufige Koordinatensysteme zur Quantifizierung des visuell wahrnehmbaren Farbraums, wie z. B. LMS, XYZ, RGB, CMYK, HSV, Lab, 111213, YCbCr, xvYCC, YPrPb, YUV, YIQ, YDbDr und YCC. Über mathematische Operationen ist die Umrechnung zwischen den verschiedenen Koordinatensystemen möglich.

Bei einer weiteren vorteilhaften Ausgestaltung der Erfindung ist vorgesehen, dass die Soll-Farbe durch eine Soll-Helligkeit, eine Soll-Sättigung und einen Soll-Farbton definiert ist und dass die Farbmessung die messtechnische Ermittlung von Helligkeit, Sättigung und Farbton des gebrannten Materials der Kalibrier-Brenngutprobe umfasst.

Wie bereits oben erwähnt, handelt es sich bei dem kalibrierbaren Brennprozessparameter um die (vorzugsweise Maximal-)Temperatur, auf die die Brennkammer gemäß vorgegebenem Brennprozess erhitzt werden soll, wobei der Messwert eines die Temperatur in der Brennkammer des Dental-Brennofens ermittelnden Temperatursensors mittels eines Temperatur-Offsetwerts korrigiert wird.

Schließlich können neben der Farbe der gebrannten Kalibrier-Brenngutprobe auch deren Transluzenz und/oder Glanz überprüft werden, um auf Fehleinstellungen zu schließen. Hierbei ist dann erfindungsgemäß vorgesehen, dass die Farbmessung die messtechnische Ermittlung der Transluzenz und/oder des Glanzes des gebrannten Dentalmaterials der Kalibrier-Brenngutprobe umfasst und dass eine Abweichung oder ein Abweichungsgrad der Ist-Transluzenz von der Soll-Transluzenz und/oder des Ist-Glanzes von dem Soll-Glanz des gebrannten Dentalmaterials der Brenngutprobe auf eine erforderliche Kalibrierung des Ofens schließen lässt.

Desweiteren ergibt sich die Möglichkeit lokale Temperaturunterschiede im Brennofen durch Messungen an verschiedenen Stellen der Kalibrierbrenngutprobe zu erfassen.

Erfindungsgemäß wird also ein insbesondere elektronisches, digitales Farbmessgerät verwendet, dessen Messwerte in die Steuerung für den Dental-Brennofen eingehen. Ferner werden vereinheitlichte Kalibrier-Brenngutproben sowie ein vereinheitlichtes Brennprogramm zum Brennen dieser Proben zwecks Bestimmung von Farbabweichungen (und gegebenenfalls auch Transluzenz- und/oder Glanzabweichungen) der gebrannten Brenngutproben von der unter optimalen Bedingungen zu erwartenden Farbe/Transluzenz/Glanz verwendet. Ferner umfasst die Erfindung die automatische Rückführung der Farbabweichungs informationen und gagebenenfalls der Transluzenz- und/oder Glanzabweichungsinformationen in die Ofensteuerung zwecks Korrektur der Brenntemperatur und genauer gesagt des Temperatur-Offsetwerts.

Für die Umsetzung der Erfindung in einem Dental-Brennofen ist der Brennofen selbst mit einer Ofensteuerung, einem digitalen Farbmessgerät, einer Schnittstelle zwischen dem Farbmessgerät und der Ofensteuerung zur Übertragung der Farbinformationen (und gegebenenfalls auch Transluzenz- und Glanzinformationen) und einer Software (beispielsweise in der Ofensteuerung) zur Bestimmung der Abweichung (und/oder von dessen Ausmaß) zwischen gemessenen Ist-Farbwerten und hinterlegten Soll-Farbwerten (gilt entsprechend auch für die Transluzenz und dem Glanz) und zur automatischen Anpassung der Ofentemperatur erforderlich.

Ausführungsformen der Erfindung umfassen:

- die Verwendung von Standard-Materialen mit hinterlegten Zielfarb- und/oder Zieltransluzenzwerten und/oder Zielglanzwerten,
- die Verwendung von Premium-Prüfkörpern (preforms aus "kalibrierten" Chargen), die beispielsweise mit kalibrierten Soll-Werten ausgeliefert werden (und gegebenenfalls vom Anwender in die Software eingegeben müssen), und
- die Definition der Sollwerte durch den Benutzer (wobei stets dasselbe Material verwendet werden sollte), um den Dental-Brennofen stets auf den gewünschten, selbstdefinierten Zustand zurückzuführen, wobei ein Brennprozess mit einem bestimmten Material, anschließendes Messen, anschließendes Übertragung und Speichern der Referenzwerte durchgeführt wird.

Wesensmerkmal der Erfindung ist die automatische Korrektur der Brenntemperatur des Brennofens. Die Aufheizrate sowie die Haltezeit bei der Brenntemperatur sind insofern von untergeordneter Bedeutung, als sie eine Steuerung der Temperaturdifferenz (also insbesondere keine Absolutmessung der Temperatur) über die Zeit darstellen und die Zeitmessung dank hochgenauer Taktgeber in den Mikroprozessor-Steuerungen der Öfen keinerlei praxisrelevante Abweichungen ausweist. Selbiges gilt für die Abkühlrate der Öfen. Demgegenüber spielt der absolute Wert der Brenntemperatur eine entscheidende Rolle für das optische Erscheinungsbild des keramischen Brenngutes (siehe z. B. Claus H. Ein einfacher Test zur Prüfung des Brenngrades der Dentalkeramik. Dent Lab 1997; 45; 245-248 und Thoely, M. The system Y-TZP and its porcelain. The interface and firing influences of the porcelain on the "chipping". University of Otago, Dissertation, 2012).

Die Bedeutung der Erfindung ist darin zu sehen, dass die für das Brennen keramischer Materialien verwendeten Temperaturen die physikalischen Eigenschaften (z.B. Bruchfestigkeit) des Brenngutes wesentlich beeinflussen. Anhand des optischen Erscheinungsbildes kann aber auf die für das Brennen wirksame Temperatur geschlossen und diese ggf. korrigiert und der Dental-Brennofen kalibriert werden.

Abweichungen der realen, gemessenen Brenntemperatur $T_{Mess}$ im Brennofen von der eingestellten (idealen) Brenntemperatur $T_{Anzeige}$ können z. B. durch Alterung des Thermoelements zur Messung der Temperatur im Brennraum entstehen. Weiterhin können auch bei Erreichen der idealen Brennraumtemperatur Abweichungen der optischen (und anderer physikalischer) Eigenschaften des Brennguts durch Verwendung unterschiedlicher Auflagematerialien für das Brenngut ("Brennträger"), oder durch unterschiedliche Höhen des Brennguts im Ofen entstehen.

Das optische Erscheinungsbild eines Körpers setzt sich zusammen aus den klassischerweise als Farbe bezeichneten Farbkoordinaten, sowie den ebenfalls aus farbmetrischen Messungen ermittelbaren Werten für die Lichttransmission ("Transluzenz") und dem Glanz der Probe. Für die Quantifizierung der Farbe ist es gänzlich unerheblich welcher Farbraum benutzt wird. Die Farbeigenschaften eines Körpers können in verschiedenen Koordinatensystemen (Farbräumen) beschrieben werden, die über mathematische Transformationen ineinander überführbar sind. In der vorliegenden Anwendung wird vorzugsweise das Lab-System verwendet, wobei dies keineswegs zwingend ist, da die Systeme als gleichwertig zu beurteilen sind. Weder Transluzenz noch Glanz sind in den Farbkoordinaten enthalten. Für die vorliegende Erfindung werden die Lab-Farbkoordinaten und ggf. zusätzlich der Glanz und die Transluzenz und möglicherweise weitere optische Eigenschaften verwendet.

Zum Zwecke der Einstellung der Brenntemperatur ist gemäß einem Ausführungsbeispiel der Erfindung folgendes Vorgehen vorgesehen:

a) Brennen einer Brennprobe aus einem speziell für diesen Zweck hergestellten und vom Hersteller mitgelieferten, keramischen Material mit dafür vordefinierten Brennparametern, die in ihrer Gesamtheit ein Brennprogramm bilden und in z. B. der Steuerung des Brennofens als solches hinterlegt sind.

b) Messen der Farbkoordinaten (L, a, b) der Brennprobe und ggf. der Transluzenz und/oder des Glanzes der Brennprobe sowie möglicherweise weitere Parameter mit einem geeigneten Farbmessgerät. Hierzu bieten sich Photospektrometer an, die über entsprechende Beleuchtungseinrichtungen und Auswertesoftware verfügen.

c) Bestimmung der im Ofen real herrschenden Brenntemperatur $T_{Mess}$ aus den n (z. B. n = 3 Farbkoordinaten) gemessenen, optischen Werten unter Verwendung der aus in einer vorherigen Messreihe (siehe weiter unten unter e) ermittelten Tabellen. Insbesondere kann hierfür ein Verfahren zur Minimierung der Fehlerquadratsumme verwendet werden. Es seien $M_1$, $M_2$, $M_3$....$M_n$ die n gemessenen optischen Parameter der Brennprobe und $P_1(T_j)$, $P_2(T_j)$, $P_3(T_j)$...$P_n(T_j)$ die n tabellarisch hinterlegten Werte für die optischen Parameter bei den Temperaturen $T_j$ (j = 1, ..., m). Die reale Brenntemperatur $T_{Mess}$ ergibt sich dann aus:

$$T_{Mess} = \min_j \sum_{i=1}^{n} a_i * \left( M_i - P_i(T_j) \right)^2$$

wobei $a_i$ Gewichtungsfaktoren für die einzelnen Parameter sind, die zur Anpassung des unterschiedlichen Wertebereichs sowie zur unterschiedlichen Gewichtung der Parameter dienen.

d) Ableitung eines Korrekturwertes für die Brenntemperatur im Brennofen. Der Korrekturwert ergibt sich als

$$T_{korr} = T_{Mess} - T_{Anzeige}$$

e) Die zuvor unter c) erwähnte Messreihe wird z. B. wie folgt durchgeführt: Aus einem unter a) genannten keramischen Material werden gleichartige Probekörper gefertigt und diese in demselben oder in einem baugleichen, sehr exakt geregelten und überwachten Ofen mit unterschiedlichen Brenntemperaturen $T_j$ gebrannt. Von allen Probekörpern werden die später verwendeten optischen Eigenschaften gemessen und tabellarisch in Abhängigkeit der Temperaturen $T_j$ abgelegt. Die entsprechenden Tabellen werden bei der späteren Messung zur Bestimmung der im Ofen vorherrschenden, realen Brenntemperatur verwendet.

f) Die Tabellen können aufgrund des bei verschiedenen Kombinationen von mindestens zwei, insbesondere mehreren Brennparametern erfolgenden Brennens der Probekörper erstellt werden. Die gemessenen Farbkoordinaten werden dabei tabellarisch in Abhängigkeit von den mehreren, innerhalb der Messreihe(n) verschieden groß gewählten Brennparametern abgelegt. Damit kann der Dental-Brennofen hinsichtlich mehrerer Brennparameter kalibriert werden.

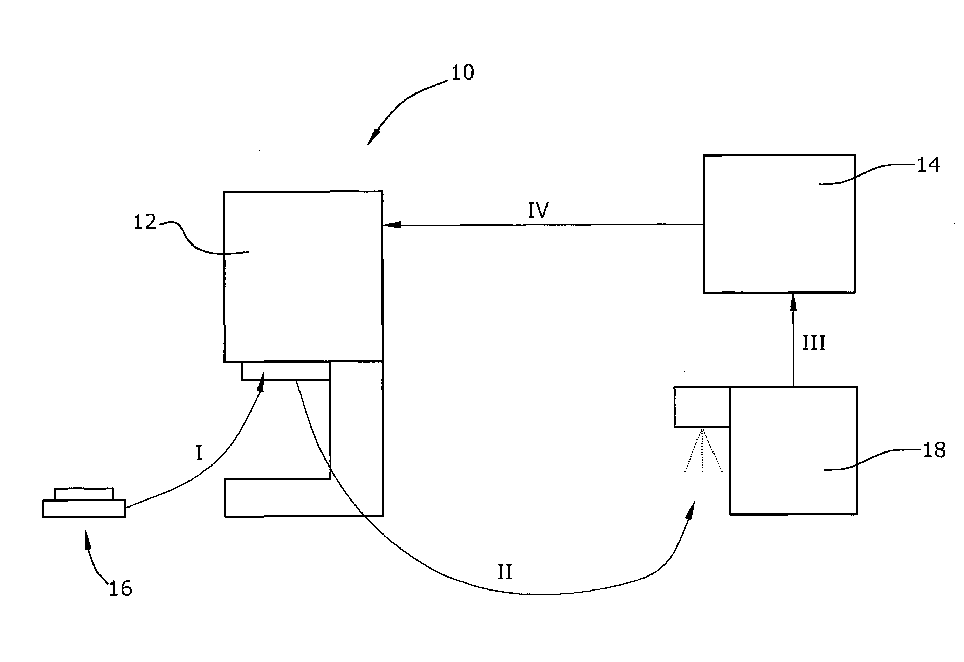

Die Erfindung wird nachfolgend anhand der Zeichnung, die ein Ausführungsbeispiel zeigt, näher erläutert.

In der Zeichnung ist mit 10 ein Dental-Brennofen bezeichnet, der eine Brennkammer 12 aufweist, die durch eine Steuereinheit 14 entsprechend einem gewünschten Brennprozess steuerbar ist. Dabei umfasst diese Steuerung der Brennkammer 12 deren (Maximal-)Temperatur, eine gegebenenfalls erforderliche Evakuierung und einen vorgegebenen Temperaturverlauf.

Eine Kalibrier-Brenngutprobe 16 wird in der Brennkammer 12 gemäß einem vorgegebenen Brennprozess gebrannt (siehe Schritt I in der Zeichnung). Nach dem Brennprozess wird die Farbe und gegebenenfalls die Transluzenz und/oder der Glanz der gebrannten Kalibrier-Brenngutprobe mit Hilfe eines elektronischen, digitalen Farbmessgeräts 18 vermessen (siehe den Schritt II in der Zeichnung). Die Messergebnisse des Farbmessgeräts werden gemäß Schritt III der Zeichnung an die Steuereinheit 14 übergeben. In entweder der Steuereinheit 14 oder aber in dem Farbmessgerät 18 wird ein Ist/Soll-Vergleich der gemessenen Farbe bzw. gemessenen Transluzenz und/oder Glanz mit z.B. in einem automatisch auslesbaren Datenspeicher abgelegten Farbwerten bzw. Transluzenz-/Glanzwerten durchgeführt. Abweichungen führen zu einer automatischen Kalibrierung der für die Abweichung verantwortlichen Brennprozesstemperatur, so dass ein nachfolgender Brennprozess durch die Steuereinheit 14 automatisch mit der kalibrierten, in einem automatisch auslesbaren Datenspeicher abgelegten Brennprozesstemperatur durchgeführt werden kann (siehe Schritt IV der Zeichnung).

**Patentansprüche**

1. Verfahren zur automatischen Kalibrierung von Dental-Brennöfen (10), wobei bei dem Verfahren

    - ein Dental-Brennofen (10) mit einer Steuereinheit (14) zur Steuerung des Dental-Brennofens (10) zur Durchführung eines Brennprozesses bereitgestellt wird, der durch Brennprozessparameter- des Dental-Brennofens (10) definiert ist,
    - mindestens eine Kalibrier-Brenngutprobe (16) aus einem Dentalmaterial bereitgestellt wird,
    - ein Farbmessgerät (18) bereitgestellt wird, das zur Übermittlung von Messsignalen oder Messergebnissen in Wirkverbindung mit der Steuereinheit (14) steht,
    - die Kalibrier-Brenngutprobe (16) in dem Dental-Brennofen (10) einem Kalibrier-Brennprozess mit vorgegebenen Brennprozessparametern ausgesetzt wird, wobei die Kalibrier-Brenngutprobe (16) nach dem Kalibrier-Brenngutprozess eine definierte Soll-Farbe aufweist,
    - die gebrannte Kalibrier-Brenngutprobe (16) mittels des Farbmessgerätes (18) vermessen wird,
    - ein Ist/Soll-Vergleich zwischen der definierten Soll-Farbe und der messtechnisch ermittelten Ist-Farbe des gebrannten Dentalmaterials der Kalibrier-Brenngutprobe (16) durchgeführt wird und
    - in Abhängigkeit von einer Abweichung der Ist-Farbe von der Soll-Farbe die Brenntemperatur kalibriert und die kalibrierte Brenntemperatur zur durch die Steuereinheit (14) erfolgenden Verwendung abgelegt wird,
    - wobei zur Kalibrierung der Brenntemperatur eine automatisch auslesbare Tabelle verwendet wird, die verschiedene Werte für die Brenntemperatur und diesen Werten jeweils zugeordnete Koordinaten von Ist-Farben enthält, welche sich im Rahmen von im Vorhinein erfolgten Versuchen beim Brennen von im Wesentlichen gleiche Materialeigenschaften sowie geometrische Formen aufweisenden Kalibrier-Brenngutproben (16) unter Verwendung der verschiedenen Werte für die Brenntemperatur eingestellt haben.

2. Verfahren nach Anspruch 1, wobei die Soll-Farbe durch eine Soll-Helligkeit, eine Soll-Sättigung und einen Soll-Farbton definiert ist und dass die Farbmessung die messtechnische Ermittlung von Helligkeit, Sättigung und Farbton des gebrannten Dentalmaterials der Kalibrier-Brenngutprobe (16) umfasst.

3. Verfahren nach Anspruch 1 oder 2, wobei der Brennprozessparameter zur Kalibrierung der Brenntemperatur ein Temperatur-Offsetwert ist, um den der Messwert eines die Temperatur in der Brennkammer (12) des Dental-Brennofens (10) ermittelnden Temperatursensors korrigiert wird.

4. Dental-Brennofen (10) mit

    - einer Brennkammer (12),
    - einer Steuereinheit (14) zur automatischen Ausführung eines Brennprozesses in der Brennkammer (12) unter Verwendung von Brennprozessparametern und
    - einem Farbmessgerät (18), das zur Übermittlung von Messsignalen oder Messergebnissen bezüglich Farbe in Wirkverbindung mit der Steuereinheit (14) steht,
    - wobei die Stenereinheit (14) dazu ausgelegt ist, anhand eines Ist/Soll-Vergleichs der Farbe einer KalibrierBrenngutprobe (16) die Brenntemperatur automatisch zu kalibrieren, und zwar unter Verwendung einer automatisch auslesbarer Tabelle, die verschiedene Werte für die Brenntemperatur und diesen Werten jeweils zugeordnete Koordinaten von Ist-Farben enthält, welche sich im Rahmen von im Vorhinein erfolgten Versuchen beim Brennen von im Wesentlichen gleiche Materialeigenschaften sowie geometrische Formen aufweisenden Kalibrier-Brenngutproben (16) unter Verwendung der verschiedenen Werte für die Brenntemperatur eingestellt haben.

**Claims**

1. A method for automatic calibration of dental furnaces (10) wherein, in this method

    - a dental furnace (10) is provided, said dental furnace comprising a control unit (14) adapted to control the dental furnace (10) for performing a firing process defined by firing process parameters of the dental furnace (10),
    - at least one calibration firing-object sample (16) made of a dental material is provided,
    - a color measuring device (18) is provided which, for transmission of measurement signals or measurement results, is operatively connected to the control unit (14),
    - said calibration firing-object sample (16) is subjected to a calibrating firing process with predetermined firing-process parameters in the dental furnace (10), wherein, after the calibration firing-object process, the calibration firing-object sample (16) has a defined desired color,
    - the fired calibration firing-object sample (16) is measured by means of the color measuring device (18),
    - a target/actual comparison is performed between the defined desired color and the metrologically detected actual color of the fired dental material of the calibration firing-object sample (16), and
    - in accordance with a deviation of the actual color from the desired color, the firing temperature is calibrated and the calibrated firing temperature is stored for use under control of the control unit (14),
    - wherein, for calibration of the firing temperature, use is made of an automatically readable table containing different values for the firing process temperature and respective values of actual colors assigned to these values, which coordinates have been obtained in preceding tests when firing calibration firing-object samples (16) of substantially identical material properties and geometric shapes with use of the different values for the firing process temperature.

2. The method according to claim 1, wherein the desired color is defined by desired brightness, a desired saturation and a desired shade of color, and the color measurement comprises the metrological detection of brightness, saturation and shade of color of the fired dental material of the calibration firing-object sample (16).

3. The method according to claim 1 or 2, wherein said firing process parameter for calibrating the firing temperature is a temperature offset value for use in correcting the measurement value of a temperature sensor detecting the temperature in the firing chamber (12) of the dental furnace (10).

4. A dental furnace (10) comprising

    - a combustion chamber (12),
    - a control unit (14) for automatically performing a firing process in the combustion chamber (12) with use of firing process parameters, and
    - a color measuring device (18) which, for transmission of measurement signals or measurement results with respect to color, is operatively connected to the control unit (14),
    - the control unit (14) being designed to automatically calibrate the firing temperature on the basis of a target/actual comparison of the color of a calibration firing-object sample (16), notably by use of an automatically readable table containing different values for the firing temperature and respective coordinates of actual colors assigned to these values, which coordinates have been obtained in preceding tests when firing calibration firing-object samples (16) of substantially identical material properties and geometric shapes with use of the different values for the firing temperature.

**Revendications**

1. Procédé d'étalonnage automatique de fours dentaires (10), ledit procécé comprenant les étapes consistant à

    - mettre à disposition un four dentaire (10) équipé d'une unité de commande (14) pour la commande du four dentaire (10), afin de mettre en oeuvre un processus de cuisson qui est défini par les paramètres régissant le processus de cuisson du four dentaire (10),
    - mettre à disposition au moins une éprouvette d'étalonnage de matériau à cuire (16) obtenue à partir d'un matériau dentaire,
    - mettre à disposition un instrument de mesure des couleurs (18) destiné à transmettre des signaux de mesure ou des résultats de mesure en liaison active avec l'unité de commande (14),
    - soumettre l'éprouvette d'étalonnage de matériau à cuire (16) à un processus de cuisson d'étalonnage dans le four dentaire (10) en appliquant des paramètres de processus de cuisson prédéfinis, l'éprouvette d'étalonnage de matériau à cuire (16) affichant au terme du processus de cuisson d'étalonnage une couleur de consigne définie,
    - évaluer l'éprouvette d'étalonnage de matériau à cuire (16) cuite au moyen de l'instrument de mesure des couleurs (18),

- réaliser une comparaison consigne-réel entre la couleur de consigne définie et la couleur réelle telle que déterminée par la technique de mesure du matériau dentaire cuit de l'éprouvette d'étalonnage de matériau à cuire (16), et

- étalonner la température de cuisson en fonction de l'écart entre la couleur réelle et la couleur de consigne, et consigner la température de cuisson étalonnée pour une utilisation par l'unité de commande (14),

- un tableau lisible automatiquement étant utilisé pour l'étalonnage de la température de cuisson, qui contient diverses valeurs de température de cuisson et des coordonnées de couleurs réelles associées respectivement à ces valeurs, celles-ci ayant été déterminées dans le cadre de tests réalisés au préalable par la cuisson d'éprouvettes d'étalonnage de matériau à cuire (16) présentant des propriétés de matériaux et des formes géométriques sensiblement identiques, en utilisant les différentes valeurs de la température de cuisson.

**2.** Procédé selon la revendication 1, dans lequel la couleur de consigne est définie par une brillance de consigne, une saturation de consigne et une teinte de consigne, et la mesure de la couleur comprend la détermination par une technique de mesure de la brillance, de la saturation et de la teinte du matériau dentaire cuit de l'éprouvette d'étalonnage de matériau à cuire (16).

**3.** Procédé selon la revendication 1 ou 2, dans lequel le paramètre du processus de cuisson pour l'étalonnage de la température de cuisson est une valeur de décalage de la température à hauteur de laquelle la valeur de mesure d'un capteur de température indiquant la température relevée dans la chambre de combustion (12) du four dentaire (10) est corrigée.

**4.** Four dentaire (10), comprenant :

- une chambre de combustion (12),
- une unité de commande (14) permettant l'exécution automatique d'un processus de cuisson dans la chambre de combustion (12) en utilisant des paramètres de processus de cuisson, et
- un instrument de mesure des couleurs (18) destiné à transmettre des signaux de mesure ou des résultats de mesure portant sur la couleur en liaison active avec l'unité de commande (14),
- l'unité de commande (14) étant configurée de façon à étalonner automatiquement la température de cuisson par le biais d'une comparaison entre couleur de consigne et couleur réelle d'une éprouvette d'étalonnage de matériau à cuire (16), et ce en utilisant un tableau lisible automatiquement qui contient diverses valeurs de température de cuisson et des coordonnées de couleurs réelles associées respectivement à ces valeurs, celles-ci ayant été déterminées dans le cadre de tests réalisés au préalable lors de la cuisson d'éprouvettes d'étalonnage de matériau à cuire (16) présentant des propriétés de matériaux et des formes géométriques sensiblement identiques, en utilisant les différentes valeurs de la température de cuisson.

EP 2 749 246 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1650519 A

- EP 2026027 A

**In der Beschreibung aufgeführte Nicht-Patentliteratur**

- **CLAUS H.** Ein einfacher Test zur Prüfung des Brenngrades der Dentalkeramik. *Dent Lab,* 1997, vol. 45, 245-248

- The system Y-TZP and its porcelain. The interface and firing influences of the porcelain on the ''chipping. **THOELY, M.** Dissertation. University of Otago, 2012